**Europäisches Patentamt**

**European Patent Office**

**Office européen des brevets**

(19)

(11) Veröffentlichungsnummer : **0 393 369 B1**

(12) # EUROPÄISCHE PATENTSCHRIFT

(45) Veröffentlichungstag der Patentschrift :
03.06.92 Patentblatt 92/23

(51) Int. Cl.⁵ : **B65D 19/08, B65D 19/38**

(21) Anmeldenummer : **90105277.9**

(22) Anmeldetag : **21.03.90**

(54) **Transport- und Lagergestell nach Art einer Palette.**

(30) Priorität : **24.03.89 DE 3909808**

(43) Veröffentlichungstag der Anmeldung :
**24.10.90 Patentblatt 90/43**

(45) Bekanntmachung des Hinweises auf die
Patenterteilung :
**03.06.92 Patentblatt 92/23**

(84) Benannte Vertragsstaaten :
**AT BE CH DE DK ES FR GB GR IT LI LU NL SE**

(56) Entgegenhaltungen :
**DE-C- 2 836 093**
**DE-U- 1 808 687**

(73) Patentinhaber : **Langer, Ruth, geb. Layher**
**Im Weinberg 13**
**W-7129 Güglingen (DE)**

(72) Erfinder : **Langer, Ruth, geb. Layher**
**Im Weinberg 13**
**W-7129 Güglingen (DE)**

(74) Vertreter : **Utermann, Gerd, Dipl.-Ing.**
**Kilianstrasse 7 (Kilianspassage) Postfach 3525**
**W-7100 Heilbronn (DE)**

## Beschreibung

Die Erfindung betrifft ein Transport- und Lagergestell nach Art einer Palette mit einem unteren festen, rechteckigen Rahmen und in den Ecken desselben vorgesehenen, vertikal aufragenden Rungen-Halterohren, in welche vertikal stehende Rungen einsteckbar sind und welche an ihren unteren Enden Einweistrichter und im inneren Abstützbegrenzungen aufweisen.

Aus DE-PS 28 36 093 C2 ist eine Rungenpalette oder ein Lagergestell mit den zuvor behandelten Merkmalen bekannt. Dieses dient dazu, Gerüstbestandteile, wie Gerüstböden, Stangen, Rohre und Rahmen - also sich längserstreckende, steife Gebilde - auf dem Rahmen zwischen den Rungen zu stapeln, um sie im Lager oder für den Transport zusammen zu haben. Die Einweistrichter dienen dazu, mehrere Transport- und Lagergestelle übereinander jeweils auf den oberen Enden der Rungen darunter befindlicher Rungenpaletten leicht absetzen zu können.

DE-GM 1 808 687 zeigt eine Transportpalette zum Heranbringen von versandfertig verpackten Gütern an eine Verladestelle. Eine im Grundriß länglich rechteckige Transportplatte hat untere, quer verlaufende hölzerne Stützschienen und eine Mehrzahl von Bohrungen, in die die Zapfen von Pfosten gesteckt werden. Die Pfosten haben seitliche Auslegearme. Für das Übereinanderstapeln ist die Palette nicht geeignet. Die Pfosten können in verschiedene, nebeneinander liegende Löcher gesteckt werden, um Länge und Breite des zu begrenzenden Aufnahmeraumes zu variieren und auch kleinere Transportgüter festzuhalten. Die Gestaltung betrifft insbesondere die Ausbildung mit Ösen zum Einhängen von Stangen und dgl..

Die deutsche Patentschrift 31 47 283 zeigt eine Zentriereinrichtung für kompakt stapelbare Paletten zur Aufnahme von Fässern mit vorzugsweise radioaktiven Abfällen. Dabei sind Rungen mit trichterförmigen Füßen auch für das Stapeln vorgesehen. Eine Runge an jeder Palette ist länger als die anderen, so daß die jeweils darüber zu stapelnde Palette auf einem Pfosten zentriert und dann herumgeschwenkt und leicht auf die anderen passend aufgesteckt werden kann. Maßnahmen für das Einstecken der Rungen in unterschiedlich beabstandete Aufnahmeausnehmungen sind nicht vorhanden. Die Anpassung an unterschiedliche Abmessungen aufweisende Lagergüter ist nicht möglich.

Das Bedürfnis nach Optimierung der Transport- und Lagerbedingungen, vor allem auch bei den engen Raumverhältnissen auf Ladepritschen von Fahrzeugen und Anhängern macht es erforderlich, die Abmessungen solcher Einheiten zu optimieren. Dabei hat sich herausgestellt, daß es zweckmäßig ist, zusammenhängende Gerüstrahmen so zu stapeln, daß die Palette an der Seite über sie nicht wesentlich hinausragt. Andererseits möchte man die ansonsten zum Gerüst gehörenden langgestreckten Elemente auch in der bisherigen Form zwischen den Rungen stapeln können. Das hat vor allem mit der Optimierung der Abmessungen und der Ausnutzung der Flächen zu tun. Der Erfindung liegt die Aufgabe zugrunde, ein Transport- und Lagergestell der eingangs genannten Art so auszugestalten, daß die Rungen nach den Bedürfnissen der zu stapelnden Gerüstteile für unterschiedliche Gerüstteile an jeweils bezüglich der Abmessungen optimalen Stellen stehen und auch rahmenförmige Teile bei minimalem Flächenbedarf sicher gehalten werden können.

Erfindungsgemäß ist vorgesehen, daß in jeder Ecke quer zur Längsrichtung des Rahmens außerhalb des jeweiligen Halkrohrs ein weiteres nach oben offenes Rungen-Halterohr mit unterem Einweistrichter vorgesehen ist, wobei der Abstand der Rungen-Halterohre vorzugsweise derart gewählt ist, daß beim Einstecken der Rungen in die äußeren Rungen-Halterohre plattenförmige Gerüstelemente stapelbar sind, während beim Einstecken in die jeweils innen liegenden Rungen-Halterohre zusammenhängende Gerüstrahmen derart stapelbar sind, daß die Rungen zwischen den längs liegenden Rahmenbegrenzungen verlaufen, während die längs liegenden Rahmenbegrenzungen sich auf den außen liegenden Rungen-Halterohren abstützen.

Dadurch, daß man infolge der jeweils doppelten Rungen-Halterohre die Rungen in unterschiedlichem Abstand einstecken kann, kann man sie einmal so setzen, daß die längsliegenden Rahmenbegrenzungen außerhalb der Rungen, jedoch über den äußeren Rungen-Halterohren liegen. So bestimmt die jeweilige Größe solcher Rahmen die Abmessungen des Transport- und Lagergestelles. Die Rahmen sind dann bei kleinstem Platzverbrauch bezüglich der Breite optimal gehalten und gestapelt. Für andere Güter kann es sinnvoll sein, die breite Einsteckposition oder die engere Position zu wählen. Dabei kann man die Positionen so setzen, daß übliche Gerüstboden-Breiten gerade einzeln oder zu mehreren sicher zwischen den Rungen seitlich unverschiebbar gehalten werden können. Sonstige stangenförmige Gerüstelemente können in beiden Einstecklagen gestapelt werden.

Ein Ausführungsbeispiel der Erfindung wird nachfolgend anhand der Zeichnungen beschrieben.

Es zeigen:

Fig. 1 Das Schrägbild zweier übereinander gestapelter Transport- und Lagergestelle, bei dem im unteren die Rungen außen und im oberen die Rungen innen eingesteckt sind;

Fig. 2 einen Horizontalschnitt durch die beiden Rungen-Halterohre einer Ecke mit Draufsicht auf die Längs- und Querträger des Palettenrahmens.

Das Gestell 10 hat jeweils zwei Längsträger 11.1 und 11.2 sowie zwei Querträger 12.1 und 12.2. Vor diese sind stirnseitig die inneren Rungen-Halterohre 15.1 bis 15.4 geschweißt, wie es aus der vorn genannten Patentschrift bekannt ist. Dabei ist nur ein kleiner Überstand der oberen Enden 16 der Rungen-Halterohre 15.1 bis 15.4 über den Auflageflächen 17 der Querträger 12.1 und 12.2 bzw. der Längsträger 11.1 und 11.2 gewählt. Unter den Längs- und Querträgern sind in den Ecken aus DE-PS 28 35 738 C3 bekannte Bügel 18 eingeschweißt. Diese dienen der Eckversteifung und zum Halten von Anschlagmitteln der Hebezeuge. Wie ersichtlich, sind die unteren Abschnitte der Rungen-Halterohre entsprechend lang gestaltet, daß die Längsträger 11.1 und 11.2 und die Querträger 12.1 und 12.2 im Abstand vom Boden liegen und eingesteckte Rungen 26.1 bis 26.4 bzw 26.5 bis 26.8 hinreichend stabil einsteckbar sind. An den unteren Enden der Rungen-Halterohre 15.1 bis 15.2 sind Einweistrichter-Füße 19.1 bis 19.4 ausgebildet oder angeschweißt, die einerseits als Stützfüße am Boden dienen und andererseits das Stapeln übereinander erleichtern. Im Innern sind im Anschlußbereich der Einweistrichter nicht dargestellte Anschläge für die von unten eingreifenden Rungen vorgesehen.

Die Längsrichtung 20 der Stapelgüter ist als Mittelachse eingezeichnet. Bezüglich dieser Mittelachse oder Längsrichtung 20 sind quer liegend nach außen versetzt unmittelbar anschließend an die inneren Rungen-Halterohre 15.1 bis 15.4 weitere Rungen-Halterohre 20.1 bis 20.4 angeschweißt, die unten auf gleicher Höhe mit gleichartig ausgebildeten Einweistrichter-Füßen 21.1 bis 21.4 ausgestattet sind. Ihre obere Begrenzung 22 liegt um den Betrag 23 oberhalb des oberen Endes 16 der inneren Rungen-Halterohre 15.1 bis 15.4, so daß zwischen ihnen niedrige Güter, wie Rohre, Stangen oder Rungen eingelegt werden können, wenn das Gestell nicht voll beladen ist.

Der Abstand 24 zwischen den inneren Begrenzungen der äußeren Rungen-Halterohre 20.1 bis 20.2 entspricht bei diesem Ausführungsbeispiel etwa der Breite 25 eines unten liegend eingezeichneten Gerüstbodens 14. Das Maß kann auch auf die Breite mehrerer schmalerer Gerüstböden abgestimmt sein.

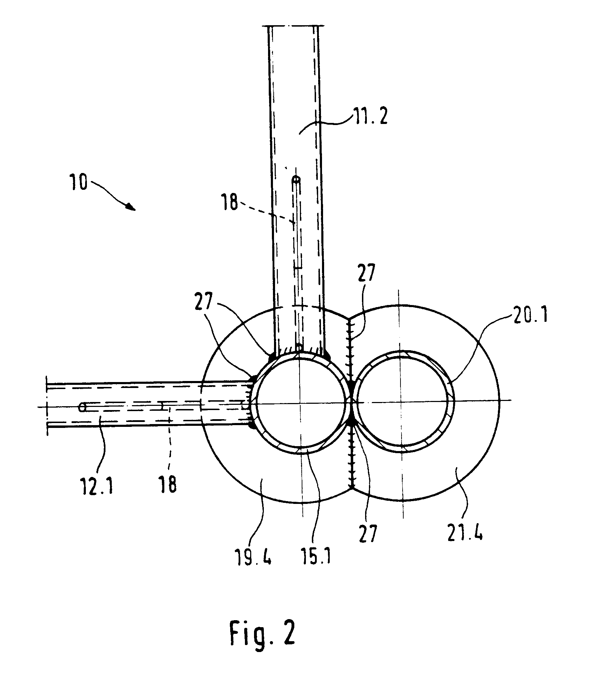

Dem Gestell 10 sind weiter vier Rungen 26.1 bis 26.4 bzw 26.5 bis 26.8 zugeordnet, die wahlweise in die inneren Rungen-Halterohre 15.1 bis 15.2 oder in die äußeren Rungen-Halterohre 20.1 bis 20.4 eingesteckt werden. Diese sind vorzugweise als Rundrohre aus Stahl oder Leichtmetall ausgebildet. Die untere Rahmenkonstruktion kann als Stahl-Schweiß- Konstruktion oder als Leichtmetall-Schweiß- Konstruktion ausgebildet sein. Auch kann man die Eckbauteile in sonstigen Metallform-Verfahren herstellen und mit geeigneten Längs- und Querträgern verbinden. In diesem Beispiel ist das Verschweißen von Abschnitten von Stahlrohren gewählt, wobei die insbesondere aus Fig. 2 ersichtlichen Schweißnähte 27 zur Verbindung der einzelnen Bestandteile benutzt sind.

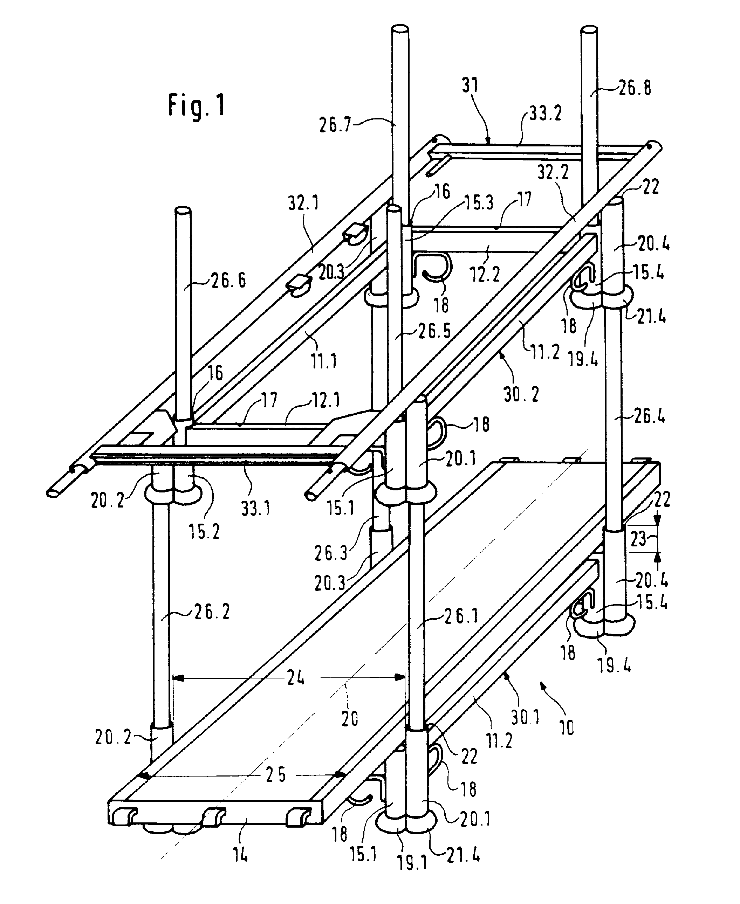

Wie aus Fig. 1 ersichtlich, sind bei dem unteren Rahmen 30.1 die Rungen 26.1 bis 26.4 außen liegend eingesteckt, während in den oberen Rahmen 30.2 die Rungen 26.5 bis 26.8 in die innen liegenden Rungen-Haltrohre 15.1 bis 15.4 derart eingesteckt sind, daß ein Gerüstrahmen 31 zwischen seinen Stützen-Rohren 32.1 und 32.2 von den Rungen 26.5 bis 26.8 gehalten ist. Die Stützen-Rohre 32.1 und 32.2 stützen sich, wie ersichtlich, auf den oberen Stützflächen 22 der äußeren Rungen-Halterohre 20.1 bis 20.4 des oberen Rahmens 30.2 ab. Dadurch erhält man Abmessungen, die nur um die Außenteile der Einweistrichter-Füße über die Breite der Gerüstrahmen 31 hinausgehen, und man erhält trotzdem eine einwandfreie Zentrierung zum Stapeln. Die Gerüstrahmen 31 haben Querstreben 33.1 und 33.2 und sind hier beispielsweise Stellrahmen, deren Stützen 32.1 und 32.2 die längs liegenden Rahmenbegrenzungen im Sinne des Anspruches sind. Andere rahmenartige Elemente können genauso gestapelt werden.

Der einfache Aufbau und die vielseitige Verwendbarkeit bei Optimierung des Raumbedarfs zeichnen das erfindungsgemäße Transport- und Lagergestell besonders aus.

Den Gegenstand kann man zusammengefaßt auch wie folgt darstellen:

Das Transport- und Lagergestell (10) hat übliche Längsträger (11.1, 11.2) und Querträger (12.1, 12.2) sowie Rungen-Halterohre (15.1 bis 15.4), die zwischen die Stirnseiten der Längs- und Querträger unter Zuhilfenahme von eckaussteifenden Bügeln (18) eingeschweißt sind.

Nach außen zu diesen versetzt sind weitere Rungen-Halterohre (20.1 bis 20.4) angeschweißt, die es ermöglichen, die Rungen (26.1 bis 26.4 bzw. 26.5 bis 26.8) wahlweise in die inneren oder äußeren Rungen-Halterohre einzustecken, um verschiedene Stapelgüter sinnvoll zu halten und geringsten Raumbedarf für die Gesamtanordnung zu ermöglichen.

**Patentansprüche**

1. Transport- und Lagergestell (10) nach Art einer Palette mit einem unteren festen, rechteckigen Rahmen (30.1, 30.2) und in den Ecken desselben vorgesehenen, vertikal aufragenden Rungen-Halterohren (15.1 bis 15.4), in welche vertikal stehende Rungen (26.1 bis 26.8) einsteckbar sind und welche an ihren unteren Enden Einweistrichter (19.1 bis 19.4) und im Inneren Abstützbegrenzungen aufweisen,

**dadurch gekennzeichnet,**
daß in jeder Ecke quer zur Längsrichtung (20) des Rahmens (30.1, 30.2) außerhalb des jeweiligen Halterohres (15.1 bis 15.4) ein weiteres nach oben offenes Rungen-Halterohr (20.1 bis 20.4) mit unterem Einweistrichter (21.1 bis 21.4) vorgesehen ist, wobei der Abstand der Rungen-Halterohre vorzugsweise derart gewählt ist, daß beim Einstecken der Rungen in die äußeren Rungen-Halterohre (20.1 bis 20.8) plattenförmige Gerüstelemente (14) stapelbar sind, während beim Einstecken in die jeweils innen liegenden Rungen-Halterohre (15.1 bis 15.4) zusammenhängende Gerüstrahmen (31) derart stapelbar sind, daß die Rungen (26.5 bis 26.8) zwischen den längs liegenden Rahmenbegrenzungen (31.1, 31.2) verlaufen, während die längs liegenden Rahmenbegrenzungen (31.1, 31.2) sich auf den außen liegenden Rungen-Halterohren (20.1 bis 20.4) abstützen.

## Claims

1. Transport and storage stand (10) of the pallet type, having a lower fixed rectangular frame (30.1, 30.2) and, provided in the corners of the same, vertically rising stanchion holding tubes (15.1 to 15.4), into which vertically standing stanchions (26.1 to 26.8) can be inserted and which exhibit, at their lower ends, guiding bells (19.1 to 19.4) and, in the interior, supporting boundaries,
characterised in that,
in each corner transversely to the longitudinal direction (20) of the frame (30.1, 30.2), outside the respective holding tube (15.1 to 15.4), there is provided a further upwardly open stanchion holding tube (20.1 to 20.4) having a lower guiding bell (21.1 to 21.4), the distance between the stanchion holding tubes preferably being chosen such that, when the stanchions are inserted into the outer stanchion holding tubes (20.1 to 20.8), plate-shaped scaffolding elements (14) can be stacked, whilst, when they are inserted into each of the inner stanchion holding tubes (15.1 to 15.4), associated scaffolding frames (31) can be stacked in such a way that the stanchions (26.5 to 26.8) run between the longitudinally situated frame boundaries (31.1, 31.2), whilst the longitudinally situated frame boundaries (31.1, 31.2) are supported on the outer stanchion holding tubes (20.1 to 20.4).

## Revendications

1. Châssis de transport et de stockage (10) du genre palette, comprenant un cadre inférieur fixe rectangulaire (30.1, 30.2) et des tubes (15.1 à 15.4) de fixation de ranchers qui font saillie verticalement, dans lesquels on peut emmancher des ranchers (26.1 à 26.8) disposés verticalement, et qui présentent des entonnoirs d'entrée (19.1 à 19.4) à leur extrémité inférieure et des limites d'appui à l'intérieur,
caractérisé en ce
qu'à chaque angle, à l'extérieur du tube de fixation (15.1 à 15.4) correspondant dans la direction transversale à la direction longitudinale (20) du cadre (30.1, 30.2), est prévu un autre tube (20.1 à 20.4) de fixation de rancher, ouvert vers le haut, muni d'un entonnoir d'entrée inférieur (21.1 à 21.4), la distance d'écartement des tubes de fixation de ranchers étant de préférence choisie de manière que, si l'on emmanche les ranchers dans les tubes (20.1 à 20.8) de fixation des ranchers situés en position extérieure, on peut empiler des éléments d'ossature (14) en forme de panneaux, tandis que, si on les emmanche dans les tubes (15.1 à 15.4) de fixation des ranchers situés en position intérieure, on peut empiler des cadres d'ossature complets (31), de telle manière que les ranchers (26.5 à 26.8) passent entre les éléments limites (31.1, 31.2) des cadres qui s'étendent dans le sens de la longueur, tandis que les éléments limites (31.1, 31.2) des cadres qui s'étendent dans le sens de la longueur prennent appui sur les tubes (20.1 à 20.4) de fixation des ranchers situés en position extérieure.

Fig. 1

Fig. 2